Europäisches Patentamt

European Patent Office

Office européen des brevets

(19)

(11) Publication number: **0 150 092**

**A2**

(12) # EUROPEAN PATENT APPLICATION

(21) Application number: **85300242.6**

(22) Date of filing: **14.01.85**

(51) Int. Cl.⁴: **C 04 B 35/52**
**C 04 B 35/02**

(30) Priority: **17.01.84 JP 4769/84**

(43) Date of publication of application:
**31.07.85 Bulletin 85/31**

(84) Designated Contracting States:
**AT DE FR GB**

(71) Applicant: **SHINAGAWA REFRACTORIES CO., LTD.**
**2-1, Ohtemachi 2-chome Chiyoda-ku**
**Tokyo 100(JP)**

(72) Inventor: **Zenbutsu, Tadashi**
**4-7-11 Seta Setagaya-ku**
**Tokyo(JP)**

(72) Inventor: **Kokumai, Hiroyuki**
**673-22 Aza Kitadani Funako**
**Atsugi City Kanagawa Prefecture(JP)**

(72) Inventor: **Okikawa, Shinji**
**3-702 Hibarigaoka**
**Zama City Kanagawa Prefecture(JP)**

(72) Inventor: **Saito, Keiji**
**3-703-1 Hibarigaoka**
**Zama City Kanagawa Prefecture(JP)**

(74) Representative: **Perry, Robert Edward**
**GILL JENNINGS & EVERY 53-64 Chancery Lane**
**London WC2A 1HN(GB)**

(54) **A carbon-containing refractory.**

(57) A carbon-containing refractory composition contains 0.1 to 10 parts by weight of silicon hexaboride in 100 parts by weight of refractory material comprising 3 to 95 parts by weight carbonaceous material such as graphite and 97 to 5 parts by weight of refractory aggregate.

EP 0 150 092 A2

## A CARBON-CONTAINING REFRACTORY

The present invention relates to a carbon-containing refractory having excellent resistance to oxidation.

Owing to the high thermal conductivity of carbon, its resistance to wetting in relation to molten metal and slag, and its characteristic of preventing over-sintering of the refractory composition, refractories containing carbonaceous material such as graphite, when used along with another refractory aggregate, supplement the advantages of that aggregate and are therefore widely used, e.g. for metallurgy and steel and pig iron production.

Carbonaceous materials such as graphite, however, are very easily oxidised in an oxidising atmosphere, and thus lose the advantages described above. In order fully to exploit the advantages of carbon-containing refractories, it is very important in practice to minimise oxidation of the carbonaceous material.

JP-A-5439422, JP-A-54163913, JP-A-5565348, JP-A-55107749, JP-A-5659668 and JP-A-57166362 are examples of disclosures of carbon-containing refractories containing one or more metal powders having a higher affinity for oxygen than that of carbon. Physical techniques for preventing oxidation of carbon, by preventing contact of the carbon with oxygen are also known; for example, carbon particles have been coated with vitreous silicate, borate or phosphate. None of these solutions to the problem of oxidation is satisfactory.

A carbon-containing refractory composition according to the present invention comprises 0.1 to 10 parts by weight of silicon hexaboride per 100 parts by weight of the refractory which itself comprises 3 to 95 parts by weight of carbonaceous material (such as graphite) and 97 to 5 parts by weight of refractory aggregate.

In use of a carbon-containing refractory composition of the present invention, the silicon hexaboride is oxidised to give boron oxide on the surface of the refractory composition. The surface of the refractory may thus be covered by a highly viscous molten liquid such as kotoite (3 $MgO.B_2O_3$); the liquid is formed from components of the refractory material (such as MgO). In this way, particles of carbonaceous material such as graphite can be protected from oxidation.

The same effect as is seen as the result of using silicon hexaboride is also apparent from using boron oxide ($B_2O_3$) and boron carbide ($B_4C$), but to a less satisfactory extent. It appears that the silicon oxide which is produced together with boron oxide, on oxidation of the silicon hexaboride, reduces the melting point of the liquid formed by the boron oxide, and affects its viscosity so that it effectively covers the surface of the carbonaceous material at high temperatures, specifically above 1300 C.

In the refractory of the present invention, oxides such as magnesia, spinels, silica, zirconia, dolomite or alumina and/or non-oxides such as silicon carbide, silicon nitride or boron nitride are used. The selection of materials is not critical, but a refractory predominantly composed of magnesia, spinel or dolomite is preferred.

The carbonaceous material may be, for example, natural or artificial graphite (amorphous or crystalline), electrode scraps, foundry coke, iron coke, petroleum coke or carbon black. The nature of the material is not critical, but natural graphite is preferred. There are preferably 3 to 95 parts by weight of graphite or other carbonaceous material per 100 parts by weight of refractory materials, in order to obtain the benefit of the presence of carbon and to ensure abrasion-resistance, corrosion-resistance and mouldability of the refractory.

In view of reaction activities, homogeneity, dispersal characteristics and other characteristics, the silicon hexaboride is preferably a powder having a particle size less than 48 mesh, and more preferably less than 200 mesh (US or British). The maximum silicon hexaboride content is 10 parts by weight per 100 parts by weight of the refractory (carbonaceous material and aggregate), since there may otherwise be erosion, giving an excess of oxide, even while the oxidation resistance effect is maintained.

A carbon-containing refractory composition of the present invention can be used by formulating the particulate refractory materials and silicon hexaboride, organic resinous binder such as tar, pitch or petroleum pitch phenolic resin which has large amounts of residual carbon, press moulding and drying or thermally treating the resulting mixture at 25 to 500 C, to give an unburned refractory; a burned refractory is obtained by burning at 700 to 1500 C in a reducing atmosphere. Moreover, by thermal treatment of the mixture without additives, at a suitable temperature, it can be supplied as an unshaped refractory, e.g. for ramming or mortar or patching materials.

The following Examples illustrate the invention. All parts are by weight.

EXAMPLES 1-4

5 parts resol-type phenolic resin and 1 part novolak-type phenolic resin were added to a composition as given in the Table. The composition was kneaded for 1 hour at room temperature, then subjected to press moulding at 1500 kg/cm$^2$ and, finally, treated for 7 hours at 180 C.

0150092

The characteristics of the thus-obtained unburned carbon-containing refractories are indicated in the Table, together with those of comparative compositions. It was found that the oxidation resistance of the products of the present invention was greatly superior to that of comparative products.

The weight loss sample sizes used were 40 x 40 x 40 mm. The depth values were taken as the mean from 4 sections of the decarbonised layer, exposed by cutting at the centre of each sample after burning.

As a field experiment, products were evaluated at the wall and both trunnion portions of a 250 ton converter. The damage rate to a product of the present invention (1) was 0.3 mm/charge, about 40% less than that of the comparative product (0.5 mm/charge).

| Example | Product of Present Invention | | | | Comparative Product | | | | | |
|---|---|---|---|---|---|---|---|---|---|---|
| | 1 | 2 | 3 | 4 | 1 | 2 | 3 | 4 | 5 | 6 |
| High Purity Sea Water Magnesite Clinker | 80 | | | | 80 | 80 | 80 | | | |
| High Purity Sintering Spinel Clinker | | 80 | 50 | 80 | | | | 80 | 50 | 80 |
| Electromelting Alumina | | | 35 | | | | | | 35 | |
| Silicon Carbide | | | | 15 | | | | | | 15 |
| Crystalline Graphite | 20 | 20 | 15 | 5 | 20 | 20 | 20 | 20 | 15 | 5 |
| Silicon Hexaboride ($B_6Si$) | 3 | 2 | 1 | 1 | | | | | | |
| Metallic Al | | | | | | | 2 | | 1 | |
| Metallic Si | | | | | | | 1 | | 1 | |
| Boron Oxide ($B_2O_3$) | | | | | | 3 | | | | 1 |
| Boron Carbide ($B_4C$) | | | | | 3 | | | 2 | | |
| 1) Weight Loss after 1500°C-3Hrs. Oxidizing Burning (%) | 3.0 | 4.5 | 3.5 | 1.0 | 5.0 | 11.0 | 16.0 | 6.0 | 13.0 | 3.0 |
| 2) Depth of Decarbonized Layer after 1500C-3hrs Oxidizing Burning (mm) | 1.5 | 2.0 | 3.0 | 2.0 | 3.0 | 6.0 | 9.0 | 4.5 | 7.0 | 4.0 |

0150092

-6-

CLAIMS

1. A carbon-containing refractory composition, which comprises 100 parts by weight of refractory material consisting of a mixture of 3 to 95 parts by weight of carbonaceous material and 97 to 5 parts by weight of refractory aggregate, characterised in that the composition contains, in addition, 0.1 to 10 parts by weight silicon hexaboride per 100 parts by weight of the refractory material.

2. A composition according to claim 1, wherein the refractory material comprises an oxide selected from magnesia, spinels, silica, zirconia, dolomite and alumina.

3. A composition according to claim 1 or claim 2, wherein the refractory material comprises a non-oxide selected from silicon carbide, silicon nitride and boron nitride.

4. A composition according to any preceding claim, wherein the carbonaceous material is selected from graphite, electrode scraps, foundry coke, iron coke, petroleum coke and carbon black.

5. A composition according to claim 4, wherein the carbonaceous material is graphite.